(19)

**Europäisches Patentamt**

**European Patent Office**

**Office européen des brevets**

(11) **EP 1 335 606 A2**

(12) **EUROPEAN PATENT APPLICATION**

(43) Date of publication:
**13.08.2003 Bulletin 2003/33**

(51) Int Cl.⁷: **H04N 7/26**

(21) Application number: **03000443.6**

(22) Date of filing: **10.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **26.01.2002 KR 2002004667**

(71) Applicant: **LG ELECTRONICS INC.**
**Seoul 150-010 (KR)**

(72) Inventor: **Hong, Min Cheol**
**Seoul (KR)**

(74) Representative: **Schorr, Frank, Dr. et al**
**Diehl Glaeser Hiltl & Partner,**
**Augustenstrasse 46**
**80333 München (DE)**

(54) **Motion vector estimation with adaptive search range**

(57)     An adaptive decision method of a motion vector search range is disclosed in which motion vector values of blocks adjacent to a block where a motion vector is to be decided are decided and then a motion vector search range of the specific block is decided on the basis of the decided motion vector values of the adjacent blocks. Therefore, the present invention provides that complexity of motion vector estimation can be considerably reduced for a moving picture service on a real time basis, and complexity of motion vector estimation can be also considerably reduced without affecting a compression efficiency.

FIG.2

```
           START
             │
             ▼
┌──────────────────────────────┐
│ DECIDING MOTION VECTOR VALUES OF │─ S21
│  BLOCKS ADJACENT TO BLOCK (E)    │
└──────────────────────────────┘
             │
             ▼
┌──────────────────────────────┐
│ DECIDING MAXIMUM RANGE VALUE OF  │─ S22
│  LOCAL MOTION VECTOR OF BLOCK (E) │
└──────────────────────────────┘
             │
             ▼
┌──────────────────────────────┐
│ DEFINING MINIMUM RANGE VALUE OF  │─ S23
│   MOTION VECTOR OF BLOCK (E)     │
└──────────────────────────────┘
             │
             ▼
┌──────────────────────────────┐
│ DECIDING MAXIMUM SEARCH RANGE VALUE │─ S24
│   FOR MOTION VECTOR OF BLOCK (E)  │
└──────────────────────────────┘
             │
             ▼
┌──────────────────────────────┐
│ DECIDING FINAL MAXIMUM SEARCH RANGE │─ S25
│ VALUE FOR MOTION VECTOR OF BLOCK (E) │
└──────────────────────────────┘
             │
             ▼
            END
```

EP 1 335 606 A2

Printed by Jouve, 75001 PARIS (FR)

**Description**

BACKGROUND OF THE INVENTION

1. Field of the Invention

The present invention relates to a video coder and, more particularly, to an adaptive decision method of a motion vector search range.

2. Description of the Background Art

Recently, a next-generation video compression method has been proved to be superior to the conventional video compression method in the aspect of performance.

The next-generation video compression method shows major difference from the conventional video compression method in that it uses a 4x4 block-based transform and coding and performs a motion estimation and compensation on the basis of the block.

However, though the next-generation video compression method is superior to the video standardization method in the aspect of the performance, it has a problem that when a coder decides a motion vector for a variable block, a complexity for the motion vector estimation is considerably increased.

SUMMARY OF THE INVENTION

Therefore, an object of the present invention is to provide an adaptive decision method of a motion vector search range that is capable of remarkably reducing complexity of motion vector estimation for a moving picture service on a real time basis.

Another object of the present invention is to provide an adaptive decision method of a motion vector search range that is capable of remarkably reducing complexity of motion vector estimation without affecting a compression efficiency by estimating the search range from motion vectors of blocks adjacent to the current block.

Still another object of the present invention is to provide an adaptive decision method of a motion vector search range that is capable of remarkably reducing complexity of a coder adopting a H.26L method by estimating the search range from motion vectors of blocks adjacent to the current block.

To achieve these and other advantages and in accordance with the purpose of the present invention, as embodied and broadly described herein, there is provided an adaptive decision method of motion vector search range including the steps of: deciding motion vector values of blocks adjacent to a specific block; and deciding a motion vector search range of the specific block on the basis of the decided motion vector values of the adjacent blocks.

To achieve the above objects, there is provided an adaptive decision method of a motion vector search range including the steps of: deciding motion vector values of blocks adjacent to a block where a motion vector is to be decided; and deciding a motion vector search range of the block where a motion vector is to be decided on the basis of the decided motion vector values of the adjacent blocks.

To achieve the above objects, there is provided an adaptive decision method of a motion vector search range including the steps of: deciding motion vector values of blocks adjacent to a specific block where a motion vector is to be decided; deciding a maximum range value of local motion vector of the specific block on the basis of the decided motion vector values of the adjacent blocks; defining a minimum value of motion vector of the specific block; computing a maximum value by comparing the decided maximum range value of the local motion vector and the defined minimum value of the motion vector, and deciding the computed maximum value as a maximum search range value for the motion vector of the specific block; deciding a minimum value of the maximum search range value for the motion vector of the specific block and a search range value previously defined by a user, as a final maximum search range value for the motion vector of the specific block.

To achieve the above objects, there is provided an adaptive decision method of a motion vector search range in a motion vector estimation of a video coder, including the steps of: deciding motion vector values in horizontal and vertical directions for blocks adjacent to a block where a motion vector is to be decided; deciding a maximum range value of local motion vector in horizontal and vertical direction of the specific block on the basis of the motion vector values of the adjacent blocks; defining a minimum value of motion vector in horizontal and vertical direction of the specific block; computing a maximum value by comparing the decided maximum range value of the local motion vector and the defined minimum value of the motion vector and deciding the computed maximum value as a maximum search range value for the motion vector of the specific block; and deciding a minimum value of the maximum search range value for the motion vector of the specific block and a search range value previously defined by a user, as a final maximum search range value for the motion vector of the specific block.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a block where a motion vector is to be decided and adjacent blocks in accordance with the present invention; and

Figure 2 is a flow chart of a method for adaptively deciding a motion vector search range of the block where the motion vector is to be decided in accordance with the present invention.

DETAILED DESCRIPTION OF THE PREFERRED EMBODIMENTS

Reference will now be made in detail to the preferred embodiments of the present invention, examples of which are illustrated in the accompanying drawings.

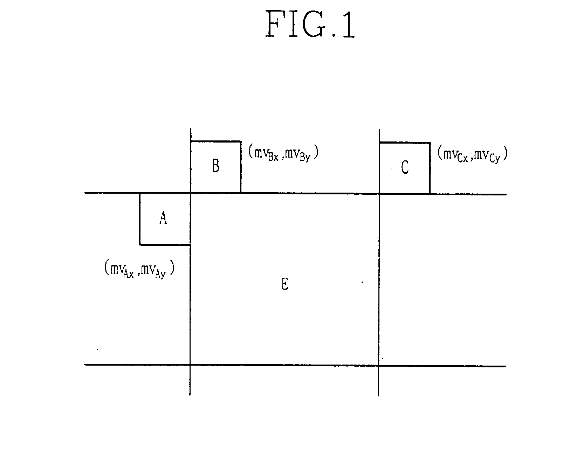

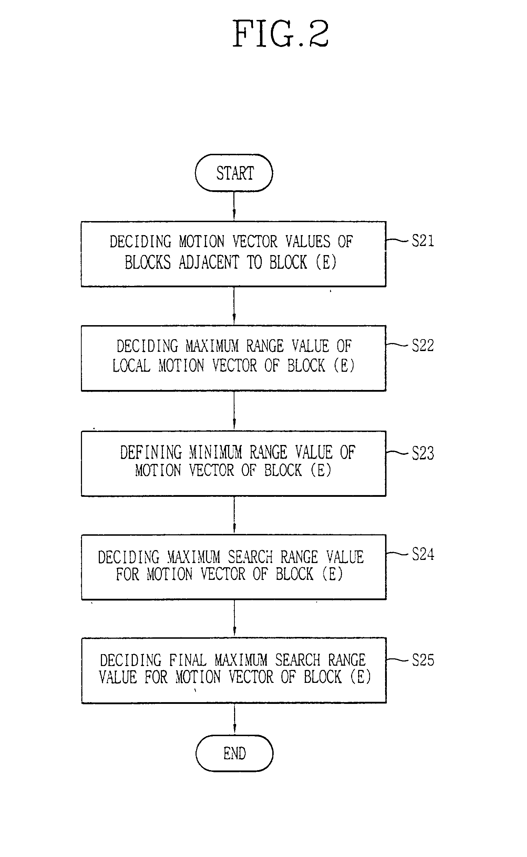

A method for adaptively deciding a motion vector search range, which is capable of remarkably reducing complexity of motion vector estimation by estimating a motion vector search range of a block on the basis of motion vector values of adjacent blocks, capable of remarkably reducing complexity of motion vector estimation without affecting a compression efficiency so as to provide a moving picture service on a real time basis, and capable of remarkably reducing complexity of a coder adopting an H.26L method, in accordance with a preferred embodiment will now be described with reference to Figures 1 and 2. Especially, a case of the H.26L video compression method will now be described as preferred in the present invention.

First, in the H.26L video compression method, temporally and spatially compressed information and additional information required for decoding are transmitted by using a method that an encoder removes spatial and temporal redundant information. In the video compression method, the decoder is constructed to perform an operation reversely to that of the encoder.

In addition, the present invention provides a method of considerably reducing complexity of the encoder without affecting a compression efficiency by estimating a motion vector search range adaptively from information of adjacent blocks.

Especially, the present invention provides a method that is capable of effectively deciding a motion vector search range of a current block on the basis of the characteristics that motion vector of the current block (that is, the block where a motion vector is to be decided) are highly correlated with motion vectors of previously coded adjacent blocks.

Figure 1 is a view showing a block where a motion vector is to be decided and adjacent blocks in accordance with the present invention.

As shown in Figure 1, it is assumed that 'E' is a current block, that is, a block where a motion vector is to be decided, and 'A', 'B' and 'C' are $4\times4$ blocks adjacent to the block (E). Motion vector values in horizontal (x) and vertical (y) direction for the adjacent block (A) are represented as $MV_{Ax}$, $MV_{Ay}$, motion vector values in horizontal (x) and vertical (y) direction for the adjacent block (B) are represented as $MV_{Bx}$, $MV_{By}$, and motion vector values in horizontal (x) and vertical (y) direction for the adjacent block (C) are represented as $MV_{Cx}$, $MV_{Cy}$.

That is, the method for deciding a motion vector search range of a block where a motion vector is to be decided includes the steps of: deciding motion vector values of blocks adjacent to a block where a motion vector is to be decided; and deciding a motion vector search range of the block where a motion vector is to be decided on the basis of the decided motion vector values of the adjacent blocks.

Figure 2 is a flow chart of a method for adaptively deciding a motion vector search range of the block where the motion vector is to be decided in accordance with the present invention.

As shown in Figure 2, a method for deciding a motion vector search range includes a first step (S21) of deciding motion vector values $(MV_{Ax}, MV_{Ay})$, $(MV_{Bx}, MV_{By})$ and $(MV_{Cx}, MV_{Cy})$ in horizontal (x) and vertical (y) direction for adjacent blocks (A, B, C) of a specific block (E) where a motion vector is to be decided; a second step (S22) of deciding a maximum range value $(max\_MV_{Ex}, max\_MV_{Ey})$ of local motion vector in horizontal (x) and vertical (y) direction from the motion vector values in the horizontal (x) and vertical (y) direction of the adjacent blocks (A, B, C); a third step (S23) of defining a minimum value of motion vector in horizontal (x) and vertical (y) direction of the block (E); a fourth step (S24) of deciding a maximum value of the defined motion vector minimum value and the decided local motion vector maximum range value as a maximum search range value for motion vector in horizontal (x) and vertical (y) direction of the block (E); and a fifth step (S25) finally deciding a minimum value of the decided maximum range value of motion vector and a search range value previously defined by a user as a final maximum search range value for motion vector of the block (E). In this respect, the user-defined search range value is a search range value defined in a coder by a user.

A method for deciding a motion vector search range of a block where a motion vector is to be decided will now be described in detail with reference to Figure 1.

First, motion vector values $(MV_{Ax}, MV_{Ay})$, $(MV_{Bx}, MV_{By})$ and $(MV_{Cx}, MV_{Cy})$ in horizontal (x) and vertical (y) direction for the adjacent block (A, B, C) of the specific block (E) where a motion vector is to be decided is decided.

That is, like the general compression method, the motion vectors $(MV_{Ax}, MV_{Ay})$, $(MV_{Bx}, MV_{By})$ and $(MV_{Cx}, MV_{Cy})$ in horizontal (x) and vertical (y) direction of the 4x4 blocks (A, B, C) adjacent to the block (E) in the H.26L compression method are decided before estimating motion vector of the block (E). The motion vectors $(MV_{Ax}, MV_{Ay})$, $(MV_{Bx}, MV_{By})$ and $(MV_{Cx}, MV_{Cy})$ in horizontal (x) and vertical (y) direction for the blocks (A, B, C) can be obtained by using a motion estimation which has been generally known in the video compression method (step S21) (thus, detailed descriptions on that are omitted).

Thereafter, a maximum range value $(max\_MV_{Ex}, max\_MV_{Ey})$ of the local motion vector in horizontal (x) and vertical (y) direction of the block (E) is decided from the motion vector values in horizontal (x) and vertical (Y) direction of the adjacent blocks (A, B, C). That is, the maximum range $(max\_MV_{Ex}, max\_MV_{Ey})$ of the local motion vector in horizontal (x) and vertical (y) direction of the block (E) is decided as a maximum value of absolute values of each motion vector in horizontal (x) and vertical (y) direction of the adjacent blocks (A, B, C) computed according to formula (1):

$$max\_MV_{Ex} = \max(abs(MV_{Ax}), \max(abs(MV_{Bx}), abs(MV_{Cx)}))$$

$$max\_MV_{Ey} = \max(abs(MV_{Ay}), \max(abs(MV_{By}), abs(MV_{Cy)})) \tag{1}$$

wherein max (u,v) signifies a maximum value of 'u' and 'v', and abs(.) signifies an absolute value function (step S22).

Meanwhile, as for the maximum range of the local motion vector of the block (E) as decided by formula (1), if the motion of the block (E) is much different from that of the adjacent block, there may occur a serious error of the motion vector. In order to prevent such an error, a minimum range value $(k_i; (k_x, k_y))$ of the motion vector in horizontal (x) and vertical (y) direction for the block (E) through formula (2) by using statistical characteristics for the local motion (step S23):

$$k_i = \begin{cases} (input\_search\_range + 2)/4 & if\ \alpha_i \geq 2 \\ (input\_search\_range + 2)/8 & otherwise \end{cases} \quad \text{------------(2)}$$

$$\alpha_i = abs(MV_{Ai}) + abs(MV_{Bi}) + abs(MV_{Ci})$$

wherein '$i$' is horizontal (x) and vertical (y) direction of a block and *input_search_range* signifies a user-defined search range.

Thereafter, a motion vector maximum search range in horizontal (x) and vertical (y) direction of the block (E) where a motion vector is to be decided is decided by formula (3). That is, a value $(2 \times max\_MV_{Ei})$ obtained by multiplying the maximum range value of the local motion vector of the block (E) computed according to formula (1) by '2' and the minimum range value $(k_i)$ defined by being computed through formula (2) are compared, of which the maximum value is decided as a motion vector maximum search range $(local\_search\_range_i)$ in horizontal (x) and vertical (y) direction of the block (E) (step S24).

$$local\_search\_range_x = \max(k_x, 2 \times max\_MV_{Ex})$$

$$local\_search\_range_y = \max(k_y, 2 \times \max\_MV_{Ey}) \qquad (3)$$

Meanwhile, there may occur an error that the motion vector search range (*local_search_range$_i$*) decided by being computed through formula (3) is set greater than the user-defined search range (*input_search_range*). Thus, in order to prevent such an error, the maximum search range value (*new_search_range$_i$*) for the motion vector of the block (E) is finally decided through formula (4):

$$new\_search\_range_x = \min(input\_search\_range, local\_search\_range_x)$$

$$new\_search\_range_y = \min(input\_search\_range, local\_search\_range_y) \qquad (4)$$

wherein '*i*' indicates *x, y.*

As so far described, the adaptive decision method of motion vector search range of the present invention has many advantages.

That is, the motion vector values of blocks adjacent to a block where a motion vector is to be decided is decided, and then, the motion vector search range of the block where a motion vector is to be decided is decided on the basis of the decided motion vector values of the adjacent blocks. Therefore, complexity of motion vector estimation can be considerably reduced for a moving picture service on a real time basis.

In addition, since the motion vector values of blocks adjacent to a block where a motion vector is to be decided is decided and then the motion vector search range of the block where a motion vector is to be decided is decided on the basis of the decided motion vector value, the complexity of motion estimation can be considerably reduced without affecting a compression efficiency.

Moreover, since the motion vector values of blocks adjacent to a block where a motion vector is to be decided is decided and then the motion vector search range of the block where a motion vector is to be decided is decided on the basis of the decided motion vector value, the complexity of a coder adopting H.26L method can be reduced. That is, a high speed coding can be performed in a digital video player employing the H.26L video compression method, so that a performance of the digital video player can be improved. Especially, by adopting the present invention to the compression coding method which demands a low bit rate or a high speed processing, the above described effect can be accomplished.

In the present invention, the case of adopting the method for deciding a motion vector search range to the H. 26L video compression method has been described, but the method for determining a motion vector search range of the present invention can be adopted for every video compression method such as MPEG-4 and H.263 to obtain the same effect.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

Summarized the present invention discloses an adaptive decision method of a motion vector search range in which motion vector values of blocks adjacent to a block where a motion vector is to be decided are decided and then a motion vector search range of the specific block is decided on the basis of the decided motion vector values of the adjacent blocks. Therefore, the present invention provides that complexity of motion vector estimation can be considerably reduced for a moving picture service on a real time basis, and complexity of motion vector estimation can be also considerably reduced without affecting a compression efficiency.

**Claims**

1.  An adaptive decision method of motion vector search range comprising the steps of:

    deciding motion vector values of blocks adjacent to a specific block; and

    deciding a motion vector search range of the specific block on the basis of the decided motion vector values of the adjacent blocks.

2. An adaptive decision method of a motion vector search range, in particular in combination with the method of claim 1, the method comprising the steps of:

   deciding motion vector values of blocks adjacent to a block where a motion vector is to be decided; and

   deciding a motion vector search range of the block

   where a motion vector is to be decided on the basis of the decided motion vector values of the adjacent blocks.

3. The method of claim 2, wherein in the step of deciding the motion vector value of adjacent blocks, motion vector values in horizontal and vertical direction of adjacent blocks are decided.

4. The method of claim 3, wherein the step of deciding a motion vector search range of the block where a motion vector is to be decided is a step of deciding a maximum range value of local motion vector in horizontal and vertical direction of the block where a motion vector is to be decided, on the basis of the motion vector values in horizontal and vertical direction for the adjacent blocks.

5. The method of claim 4, wherein the step of deciding a motion vector search range of the block where a motion vector is to be decided (that is, a motion vector deciding block) comprises:

   defining each minimum value of motion vector in horizontal and vertical direction of the motion vector deciding block; and

   deciding a maximum value of the decided maximum range value of the local motion vector and the defined minimum value of the motion vector, as a maximum search range value for motion vector in horizontal and vertical direction of the motion vector deciding block.

6. The method of claim 5, wherein the step of deciding a motion vector search range of the motion vector deciding blocks comprises:

   deciding a minimum value of the decided maximum search range value for the motion vector in horizontal and vertical direction of the motion vector deciding block and a search range value previously defined by a user, as a final maximum search range value of the motion vector for the motion vector deciding block.

7. The method of one of claims 2 to 6, wherein the step of deciding a motion vector search range of the block where a motion vector is to be decided (that is, the motion vector deciding block) comprises:

   deciding motion vector values in horizontal and vertical direction for blocks adjacent to the motion vector deciding block;

   deciding a maximum range value of local motion vector in horizontal and vertical direction of the motion vector deciding block on the basis of the motion vector values of the adjacent blocks;

   defining a minimum value of motion vector in horizontal and vertical direction of the motion vector deciding block;

   deciding a maximum value of the decided local motion vector maximum range value and the defined motion vector minimum value, as a motion vector maximum search range value in horizontal and vertical direction for the motion vector deciding block; and

   deciding a minimum value of the motion vector maximum search range value for the motion vector deciding block and the user-defined search range value, as a final motion vector maximum search range value for the motion vector deciding block.

8. An adaptive decision method of a motion vector search range, in particular in combination with the method of one of claims 1 to 7, the method comprising the steps of:

   deciding motion vector values of blocks adjacent to a specific block where a motion vector is to be decided;

deciding a maximum range value of local motion vector of the specific block on the basis of the decided motion vector values of the adjacent blocks;

defining a minimum value of motion vector of the specific block;

computing a maximum value by comparing the decided maximum range value of the local motion vector and the defined minimum value of the motion vector, and deciding the computed maximum value as a maximum search range value for the motion vector of the specific block; and

deciding a minimum value of the maximum search range value for the motion vector of the specific block and a search range value previously defined by a user, as a final maximum search range value for motion vector of the specific block.

9. The method of claim 8, wherein the motion vector of the specific block is motion vector in horizontal and vertical direction of the specific block, and the motion vectors of the adjacent blocks are motion vectors in horizontal and vertical direction of the adjacent blocks.

10. The method of one of claims 7 to 9, wherein motion vector values in horizontal and vertical direction of adjacent blocks are compared and a maximum value of the comparison result values is decided as a maximum range value of the local motion vector in horizontal (x) and vertical (y) direction of the block where a motion vector is to be decided, through the following formula:

$$\text{max\_MV}_{Ex} = \text{max}(\text{abs}(\text{MV}_{Ax}), \text{max}(\text{abs}(\text{MV}_{Bx}), \text{abs}(\text{MV}_{Cx})))$$

$$\text{max\_MV}_{Ey} = \text{max}(\text{abs}(\text{MV}_{Ay}), \text{max}(\text{abs}(\text{MV}_{By}), \text{abs}(\text{MV}_{Cy})))$$

where $\text{max\_MV}_{Ex}$ is a maximum range value of local motion vector in horizontal direction, $\text{max\_MV}_{Ey}$ is a maximum range value of local motion vector in vertical direction, $\text{MV}_{Ax}$, $\text{MV}_{Ay}$, $\text{MV}_{Bx}$, $\text{MV}_{By}$ and $\text{MV}_{Cx}$, $\text{MV}_{Cy}$ are motion vector values in horizontal and vertical direction of adjacent blocks, $\text{max}(u,v)$ is a maximum value of 'u' and 'v', and abs(.) is an absolute value function.

11. The method of one of claims 7 to 10, wherein the defined minimum value of motion vector is decided by formula of

$$k_i = \left\{ \begin{array}{ll} (input\_search\_range+2)/4 & if\ \alpha_i \geq 2 \\ (input\_search\_range+2)/8 & otherwise \end{array} \right\}$$

$$\alpha_i = \text{abs}(\text{MV}_{Ai}) + \text{abs}(\text{MV}_{Bi}) + \text{abs}(\text{MV}_{Ci})$$

wherein 'i' is horiontal direction (x) and vertical direction (y) of the block input_search_range is user-defined search range.

12. The method of one of claims 7 to 11, wherein the step of deciding a maximum range value of motion vector in horizontal and vertical direction of the block where a motion vector is to be decided, comprises:

a first step in which the decided maximum range value of local motion vector is compared with the defined minimum value of motion vector, and the computed maximum value is decided as a motion vector search range value (local_search_range$_i$); and

a second step in which a minimum value of the decided motion vector search range value (local_search_range$_i$) and the user-defined range value of motion vectors (input_search_range$_i$) is finally decided through a formula of new_search_range$_i$ = min(input_search_range, local_search_range$_i$), as a motion vector maximum search range value (new_search_range$_i$), wherein 'i' signifies horizontal (x) and vertical (y) direction of the block.

**13.** The method of claim 12, wherein the maximum value decided as the motion vector search range value is decided by a formula of:

$$local\_search\_range_x = max(k_x, cons\ tan\ t\ x\ max\_MV_{Ex})$$

$$local\_search\_range_y = max(k_y, cons\ tan\ t\ x\ max\_MV_{Ey})$$

wherein $max\_MV_{Ex}$ is a motion vector maximum value range value in horizontal direction of the block where a motion vector is to be decided, $max\_MV_{Ey}$ is a motion vector maximum range value in vertical direction of the block where a motion vector is to be decided, $k_x$ is a motion vector minimum range value in horizontal direction of the block where a motion vector is to be decided, and $k_y$ is a motion vector minimum range value in vertical direction of the block where a motion vector is to be decided.

**14.** The method of claim 13, wherein the constant is '2'.

**15.** The method of one of claims 1 to 14, wherein the adjacent block is 4x4 block adjacent to the block where a motion vector is to be decided.

**16.** An adaptive decision method of a motion vector search range, in particular in combination with the method of one of claims 1 to 15, the method comprising the steps of:

deciding motion vector values of blocks adjacent to a specific block where a motion vector is to be decided;

deciding a maximum range value of local motion vector of the specific block on the basis of the decided motion vector values of the adjacent blocks;

defining a minimum value of motion vector of the specific block;

computing a maximum value by comparing the decided maximum range value of the local motion vector and the defined minimum value of the motion vector, and deciding the computed maximum value as a maximum search range value for the motion vector of the specific block; and

deciding a minimum value of the maximum search range value for the motion vector of the specific block and a search range value previously defined by a user, as a final maximum search range value for motion vector of the specific block.

# FIG.1

# FIG.2

START

DECIDING MOTION VECTOR VALUES OF BLOCKS ADJACENT TO BLOCK (E) — S21

DECIDING MAXIMUM RANGE VALUE OF LOCAL MOTION VECTOR OF BLOCK (E) — S22

DEFINING MINIMUM RANGE VALUE OF MOTION VECTOR OF BLOCK (E) — S23

DECIDING MAXIMUM SEARCH RANGE VALUE FOR MOTION VECTOR OF BLOCK (E) — S24

DECIDING FINAL MAXIMUM SEARCH RANGE VALUE FOR MOTION VECTOR OF BLOCK (E) — S25

END